(19) Europäisches Patentamt
European Patent Office
Office européen des brevets

(11) **EP 1 476 326 B1**

(12) **EUROPÄISCHE PATENTSCHRIFT**

(45) Veröffentlichungstag und Bekanntmachung des Hinweises auf die Patenterteilung:
**09.04.2008 Patentblatt 2008/15**

(51) Int Cl.:
***B60Q 1/26*** *(2006.01)*  ***B60R 16/02*** *(2006.01)*
***G06T 1/00*** *(2006.01)*

(21) Anmeldenummer: 03737233.1

(22) Anmeldetag: **07.01.2003**

(86) Internationale Anmeldenummer:
**PCT/DE2003/000014**

(87) Internationale Veröffentlichungsnummer:
**WO 2003/066375 (14.08.2003 Gazette 2003/33)**

(54) **EINRICHTUNG ZUR AUTOMATISCHEN EINSTELLUNG DER LEUCHTDICHTE DES VON EINER RÜCKWÄRTIGEN BELEUCHTUNGSEINRICHTUNG EINES FAHRZEUGS AUSGESANDTEN LICHTBÜNDELS**

DEVICE FOR AUTOMATICALLY ADJUSTING THE BRIGHTNESS OF A LUMINOUS BEAM EMITTED BY THE REAR LIGHTING EQUIPMENT ON A VEHICLE

SYSTEME POUR REGLER AUTOMATIQUEMENT LA LUMINOSITE DU FAISCEAU LUMINEUX EMIS PAR UN DISPOSITIF D'ECLAIRAGE ARRIERE D'UN VEHICULE

(84) Benannte Vertragsstaaten:
**DE ES FR GB IT SE**

(30) Priorität: **08.02.2002 DE 10205184**

(43) Veröffentlichungstag der Anmeldung:
**17.11.2004 Patentblatt 2004/47**

(73) Patentinhaber: **ROBERT BOSCH GMBH**
**70442 Stuttgart (DE)**

(72) Erfinder: **EWERHART, Frank**
**74189 Weinsberg (DE)**

(56) Entgegenhaltungen:
**EP-A- 0 691 534      DE-A- 2 052 266**
**DE-A- 10 034 461**

**Beschreibung**

Stand der Technik

Die Erfindung geht aus von einer Einrichtung zur automatischen Einstellung der Leuchtdichte des von wenigstens einer rückwärtigen Beleuchtungseinrichtung eines Fahrzeugs ausgesandten Lichtbündels nach der Gattung des Anspruchs 1.

DE 2 052 266 A offenbart eine Einrichtung, welche eine Sensoreinrichtung in Form eines Fotowiderstands aufweist, durch die die Helligkeit in der Umgebung des Fahrzeugs ermittelt wird. Die Sensoreinrichtung ist mit einer Auswerteeinrichtung verbunden, durch die abhängig von der ermittelten Umgebungshelligkeit eine Leuchtdichte für das von der Beleuchtungseinrichtung ausgesandte Lichtbündel ermittelt wird. Die Auswerteeinrichtung ist mit einer Ansteuereinrichtung für die Beleuchtungseinrichtung verbunden, durch die der Strom und/oder die Spannung zur Versorgung der Beleuchtungseinrichtung derart eingestellt wird, daß das ausgesandte Lichtbündel die erforderliche Leuchtdichte aufweist. Als Beleuchtungseinrichtung ist dabei eine Nebelschlußleuchte oder eine Schlußleuchte vorgesehen. Die Leuchtdichte des von der Beleuchtungseinrichtung ausgesandten Lichtbündels soll darüberhinaus auch abhängig von der Sichtweite eingestellt werden, wobei eine Ermittlung der Sichtweite jedoch mittels der als Fotodiode ausgebildeten Sensoreinrichtung nicht möglich ist. Zur Ermittlung der Sichtweite wird in der DE 20 52 266 A auf andere bekannte Verfahren verwiesen, die beispielsweise bei der Schlechtwetterlandung von Flugzeugen verwendet werden. Für diese Verfahren sind jedoch zusätzliche Einrichtungen am Fahrzeug erforderlich, was zu einem großen Aufwand und zu hohen Kosten führt.

Die deutsche Offenlegungsschrift DE 100 34 461 offenbart ein Verfahren zur Sichtweitenbestimmung. Aus der europäischen Patentanmeldung EP 0 691 534 ist ein Verfahren zur Ermittlung der Sichtweite bekannt.

Vorteile der Erfindung

Die erfindungsgemäße Einrichtung mit den Merkmalen gemäß Anspruch 1 hat demgegenüber den Vorteil, daß die Ermittlung der Helligkeit und der Sichtweite mittels einer einzigen Sensoreinrichtung erfolgt, so daß der Aufbau vereinfacht ist und die Einrichtung kostengünstig ist.

In den abhängigen Ansprüchen sind vorteilhafte Ausgestaltungen und Weiterbildungen der erfindungsgemäßen Einrichtung angegeben. Die Ausbildung gemäß Anspruch 2 ermöglicht eine sichere Funktion des Bildsensors bei starken Helligkeitsschwankungen. Die Ausbildung gemäß Anspruch 4 ermöglicht auf einfache Weise eine Ermittlung der Sichtweite.

Zeichnung

Ein Ausführungsbeispiel der Erfindung ist in der Zeichnung dargestellt und in der nachfolgenden Beschreibung näher erläutert. Es zeigen Figur 1 ein Fahrzeug in schematischer Darstellung, Figur 2 den scheinbaren Kontrast eines Objekts in Abhängigkeit der Entfernung zwischen Objekt und einer Sensoreinrichtung und Figur 3 schematisch den Aufbau einer Sensoreinrichtung zur Ermittlung der Sichtweite.

Beschreibung des Ausführungsbeispiels

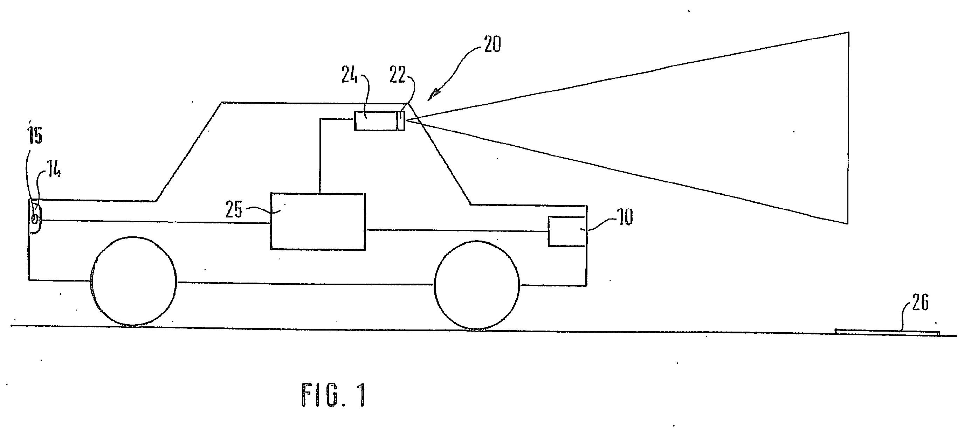

In Figur 1 ist ein Fahrzeug, insbesondere ein Kraftfahrzeug, dargestellt, das Beleuchtungseinrichtungen aufweist. Als Beleuchtungseinrichtungen weist das Fahrzeug beispielsweise im Frontbereich Scheinwerfer 10 für Abblendlicht und/oder Fernlicht und/oder Nebellicht sowie Fahrtrichtungsanzeiger auf. Das Fahrzeug weist außerdem rückwärtig wenigstens eine Beleuchtungseinrichtung in Form einer Rückleuchte 14, einer Bremsleuchte, einem Fahrtrichtungsanzeiger und gegebenenfalls einer oder mehrerer Nebelschlußleuchten auf. Das Fahrzeug weist außerdem eine Einrichtung zur automatischen Einstellung der Leuchtdichte des von wenigstens einer der rückwärtigen Beleuchtungseinrichtungen 14 ausgesandten Lichtbündels auf, die nachfolgend näher erläutert wird. Nachfolgend wird diese Einrichtung beispielhaft für die Rückleuchte 14 beschrieben, wobei diese jedoch in gleicher Weise auch für eine oder mehrere andere der Beleuchtungseinrichtungen verwendet werden kann. Die Rückleuchte 14 weist wenigstens eine Lichtquelle 15 auf, der für deren Betrieb elektrische Energie zugeführt wird.

Die Einrichtung zur automatischen Einstellung der Leuchtdichte des von der Rückleuchte 14 ausgesandten Lichtbündels weist eine Sensoreinrichtung 20 auf, durch die die Helligkeit in der Umgebung des Fahrzeugs ermittelt wird. Die Sensoreinrichtung 20 ist vorzugsweise derart angeordnet, daß diese die Helligkeit, das ist die Leuchtdichte, in der in Fahrtrichtung vor dem Fahrzeug liegenden Umgebung erfaßt. Die Sensoreinrichtung 20 kann beispielsweise im Innenraum des Fahrzeugs hinter der Windschutzscheibe angeordnet sein. Alternativ kann die Sensoreinrichtung 20 auch an anderer Stelle im Frontbereich des Fahrzeugs oder im Heckbereich, beispielsweise hinter der Heckscheibe angeordnet sein. Die Sensoreinrichtung 20 weist einen Bildsensor 22, beispielsweise in Form einer Videokamera, und eine Bildverarbeitungseinrichtung 24 auf. Der Bildsensor 22 ist vorzugsweise ein CCD-Bildsensor oder ein CMOS-Bildsensor mit einer Vielzahl von zu einer Matrix von Zeilen und Spalten angeordneten Pixeln, das sind einzelne lichtempfindliche Elemente. Der Bildsensor 22 weist vorzugsweise eine nichtlineare, logarithmische Wandelkennlinie auf, so daß dessen Empfindlichkeit mit zunehmender Helligkeit abnimmt. Dies bietet den Vorteil, daß durch den Bildsensor 22 ein großer Bereich unterschiedlicher Helligkeit erfaßt werden kann, ohne daß eine Blendeneinrichtung erforderlich ist, durch die bei großer Helligkeit ein Teil des auf den Bildsensor 22 treffenden Lichts abgeschirmt werden müsste. Die Bildverarbeitungseinrichtung 24 ist mit einer Steuereinrichtung 25 verbunden, durch die die Rückleuchte 14 angesteuert wird. Durch die Steuereinrichtung 25 wird die Rückleuchte 14, genauer deren Lichtquelle 15, mit einer veränderlichen Stromstärke und/oder mit einer veränderlichen Spannung angesteuert, so daß entsprechend die Leuchtdichte des von der Rückleuchte 14 ausgesandten Lichtbündels veränderlich ist.

Durch die Steuereinrichtung 25 wird die vom Bildsensor 22 erfaßte und durch die Bildverarbeitungseinrichtung 24 ermittelte Umgebungshelligkeit weiter verarbeitet. Abhängig von der ermittelten Umgebungshelligkeit wird die Stromstärke und/oder die Spannung an der Lichtquelle 15 der Rückleuchte 14 durch die Steuereinrichtung 25 derart eingestellt, daß das von der Rückleuchte 14 ausgesandte Lichtbündel eine definierte Leuchtdichte aufweist. Es kann dabei vorgesehen sein, daß mit zunehmender Umgebungshelligkeit die Leuchtdichte des Lichtbündels erhöht wird, indem die Stromstärke und/oder die Spannung für die Versorgung der Lichtquelle erhöht wird. Die Änderung der Leuchtdichte kann dabei in Stufen oder kontinuierlich erfolgen.

Durch die Einrichtung zur automatischen Einstellung der Leuchtdichte wird außerdem die Sichtweite in der Umgebung des Fahrzeugs berücksichtigt und abhängig davon die Leuchtdichte der Rückleuchte 14 eingestellt. Für die Ermittlung der Sichtweite wird dieselbe Sensoreinrichtung 20 verwendet wie für die Ermittlung der Umgebungshelligkeit. Durch die Bildverarbeitungseinrichtung 24 wird dabei der Kontrast eines Objekts 26 vor dem Fahrzeug ermittelt, das durch den Bildsensor 22 erfaßt wird. Als Objekt 26 kann beispielsweise eine Fahrbahnmarkierung ausgewählt werden, die einen ausgeprägten hell/dunkel Kontrast zur übrigen Fahrbahn aufweist. Das Objekt 26 wird im Bild des Bildsensors 22 zu einem ersten Zeitpunkt t1, zu dem das Fahrzeug und damit der Bildsensor 22 noch weit vom Objekt 26 entfernt sind, detektiert und vermessen. Es wird dann über einen gewissen Zeitraum im Bild verfolgt und zu einem späteren Zeitpunkt t2 wird der Kontrast erneut gemessen, zu dem das Fahrzeug und damit der Bildsensor 22 näher zum Objekt 26 angeordnet sind, da sich das Fahrzeug im Zeitraum zwischen t2 und t1 auf das Objekt 26 zubewegt hat.

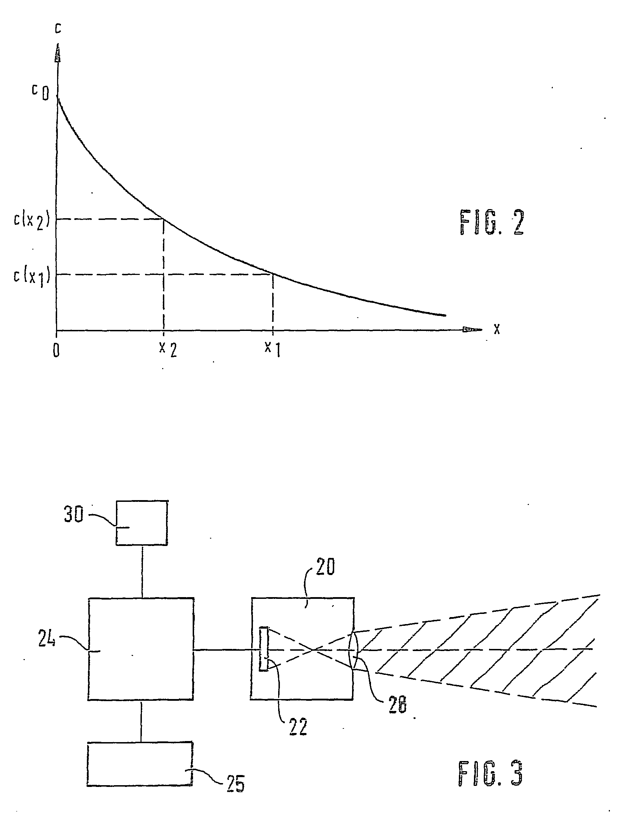

Bei optimalen Sichtbedingungen, das heißt bei großer Sichtweite, sind die Ergebnisse der Kontrastmessungen zu den Zeitpunkten t1 und t2 zumindest annähernd gleich. Bei schlechter Sicht, das heißt geringer Sichtweite beispielsweise bei Nebel, Regen, Rauch oder dergleichen ist der Kontrast zum Zeitpunkt t2 größer als zum Zeitpunkt t1. Figur 2 zeigt die Abhängigkeit des vom Fahrzeug aus meßbaren scheinbaren Kontrasts c des Objekts 26 als Funktion der Entfernung x. Bei einer Entfernung x = 0 ist der gemessene Kontrast gleich dem tatsächlichen oder objektiven Kontrast c0, das heißt dem Kontrast, der direkt an der Oberfläche des Objekts 26 vorhanden ist. Mit zunehmender Entfernung nimmt der scheinbare Kontrast c, das ist der von fern meßbare, von der Trübung der Atmosphäre beeinflußte Kontrast exponentiell nach der Formel

$$C(x) = c0 \cdot e^{-x/\delta}$$

ab, wobei $\delta$ als Sichtweite definiert werden kann. Wie man leicht aus der obigen Formel herleiten kann, kann die Sichtweite $\delta$ anhand von zwei Kontrastmessungen in beliebigen Entfernungen x1 und x2 zum Objekt 26 wie folgt bestimmt werden:

$$\delta = \frac{x_2 - x_1}{\ln(C(x_1)/C(x_2))} = \frac{x_2 - x_1}{\ln(C(x_1)) - \ln(C(x_2))}$$

Der erhaltene Meßwert der Sichtweite $\delta$ ist also völlig unabhängig vom realen Kontrast c0. Für eine korrekte Auswertung der gemessenen Kontrastwerte ist folglich keine Information über die Art des für die Messung ausgewählten Objekts 26 erforderlich.

Figur 3 zeigt stark schematisiert ein Blockdiagramm der Sensoreinrichtung 20 zur Ermittlung der Sichtweite. Die Sensoreinrichtung 20 weist den Bildsensor 22 und die Bildverarbeitungseinrichtung 24 auf. Im Strahlengang des auf den Bildsensor 22 treffenden Lichts ist eine Abbildungsoptik 28 angeordnet. Die optische Achse des Bildsensors 22 und der Abbildungsoptik 28 ist im wesentlichen parallel zur Fahrtrichtung des Fahrzeugs ausgerichtet. Der durch den Bildsensor 22 durch die Abbildungsoptik 28 erfaßte Bereich ist in Figur 3 schraffiertes kegelförmiges Volumen dargestellt. Die Ausführung des Bildsensors 22 mit logarithmischer Wandelkennlinie vereinfacht die Kontrastmessung, da der Kontrast zwischen zwei unterschiedlich hellen Stellen eines Objekts 26, das heißt das Verhältnis der von diesen Stellen abgestrahlten Lichtintensitäten, der Differenz der Signale entspricht, die von den entsprechenden Pixeln des Bildsensors 22 geliefert werden. Die Messung eines Kontrasts erfordert in der an den Bildsensor 22 angeschlossenen Bildverarbeitungseinrichtung 24 lediglich die Bildung einer Differenz, aber keine rechenaufwendige Division.

In der Bildverarbeitungseinrichtung 24 wird in einem ersten Schritt ein Objekt 26 in einem durch den Bildsensor 22 gelieferten Bild ausgewählt und eine Messung des Kontrastes $c(x_1)$ des Objekts 26 vorgenommen, wobei die Entfernung $x_1$ zwischen dem Bildsensor 22 und dem Objekt 26 nicht bekannt ist. In einem nächsten Schritt wird das Objekt 26 in vom Bildsensor 22 in schneller Folge gelieferten Bildern verfolgt, während sich das Fahrzeug weiter bewegt. Ein nächster Verfahrensschritt beinhaltet die neuerliche Messung eines Kontrastwerts $c(x_2)$ des Objekts 26. Der während der Verfolgung des Objekts 26 vom Fahrzeug zurückgelegte Weg $(x_1 - x_2)$ wird von der Bildverarbeitungseinrichtung 24 durch Integrieren eines beispielsweise vom Fahrzeugtachometer zugeführten Geschwindigkeitssignals über die Zeit mit Hilfe eines externen Zeittaktsignals ermittelt. Die Ermittlung des Weges kann auch erfolgen durch Verfolgen der Änderung eines an einem Rad des Fahrzeugs abgegriffenen Drehwinkelsignals zwischen zwei Messungen. Anschließend wird die Sichtweite δ nach der vorstehend angegebenen Formel berechnet.

Der vorstehend erläuterte Ablauf zur Ermittlung der Sichtweite kann modifiziert werden, um die Sichtweite δ mit noch höherer Genauigkeit ermitteln zu können. Beispielsweise kann vorgesehen sein, daß nicht nur zwei Kontrastwerte für das ausgewählte Objekt 26 gemessen werden, sondern eine Mehrzahl von Kontrastwerten, so daß die in Figur 2 dargestellte Kurve unter Verwendung einer Vielzahl von Meßwerten nach dem Verfahren der kleinsten Quadrate angepaßt und Sichtweite δ so mit hoher Genauigkeit ermittelt werden kann. Ferner ist es möglich, nicht nur ein Objekt 26 auszuwählen, sondern in jedem vom Bildsensor 22 gelieferten Bild Kontrastmessungen an einer Vielzahl von Objekten vorzunehmen, um so über eine Vielzahl an jeweils unterschiedlichen Objekten aufgenommenen Meßwerten der Sichtweite δ zu verfügen.

Um geeignete Objekte für eine Messung zu finden, muß die Bildverarbeitungseinrichtung 24 diejenigen Bereiche eines vom Bildsensor 22 gelieferten Bildes ausfindig machen, die einen vorgegebenen Mindestkontrast erreichen. Falls das Fahrzeug sich tatsächlich durch Nebel bewegt, so kann es unter Umständen vorkommen, daß Objekte erst ab einer geringen Entfernung vom Fahrzeug diesen Mindestkontrast erreichen. Dann kann die erste Kontrastmessung erst in geringem Abstand des Objekts vom Fahrzeug vorgenommen werden und die Zeit für eine zweite Messung kann knapp werden. Diesem Problem kann begegnet werden, indem der Bildsensor 22 sein Blickfeld nicht in Fahrtrichtung nach vorne sondern entgegengesetzt zur Fahrtrichtung nach hinten hat. Es können auch zwei Bildsensoren 22 vorgesehen werden, von denen der eine sein Blickfeld in Fahrtrichtung nach vorne und der andere sein Blickfeld entgegen Fahrtrichtung nach hinten hat. Durch die Bildverarbeitungseinrichtung 24 können dann Bilder des nach hinten gerichteten Bildsensors 22 ausgewählt werden falls bei Bildern des nach vorne gerichteten Bildsensors 22 Schwierigkeiten auftreten. Bei dem nach hinten gerichteten Bildsensor 22 kann aus allen im Blickfeld befindlichen Objekten für die Kontrastmessung das jeweils kontraststärkste ausgewählt werden, weil dieses das Objekt ist, das auch mit zunehmender Entfernung des Fahrzeugs vom Objekt am längsten sichtbar und für eine Messung geeignet bleiben wird.

Der Bildverarbeitungseinrichtung 24 kann ein Bildspeicher 30 zugeordnet sein, der dazu dient, vom Bildsensor 22 gelieferte Bilder für eine begrenzte Zeitspanne zu puffern. Bei dieser Weiterbildung kann zunächst ein vom Bildsensor 22 geliefertes Bild im Bildspeicher 30 ohne weitere Bearbeitung zwischengespeichert werden. Nachdem das Fahrzeug einen vorgegebenen Weg zurückgelegt hat und der Bildsensor 22 ein neues Bild geliefert hat, wird in diesem jüngeren Bild ein geeignetes Objekt für die Kontrastmessung gewählt und dessen Kontrast gemessen. Bei diesem Objekt kann es sich um die kontraststärkste Region des jüngeren Bildes handeln, das heißt die Messung des Kontrastes kann der Auswahl des Objektes auch vorangehen. Insbesondere bei Verwendung eines Bildsensors 22 mit logarithmischer Wandelkennlinie ist die Ermittlung des kontraststärksten Objekts mit geringem Rechenaufwand möglich. Der Kontrast $c(x_2)$ des Objekts im jüngeren Bild wird zwischengespeichert und das ausgewählte Objekt wird im älteren Bild identifiziert. Diese Identifikation kann durch Rückverfolgen des Objekts mit Hilfe einer Vielzahl von ebenfalls im Bildspeicher 30 aufgezeichneten, zwischenzeitlich erzeugten Bildern erfolgen. Alternativ können hierzu auch Kreuzkorrelationstechniken eingesetzt werden. Nach Ermittlung des Objekts im älteren Bild wird dessen Kontrast ermittelt und die Sichtweite δ nach der vorstehend angegebenen Formel ermittelt. Dieses Verfahren ist auch bei geringen Sichtweiten ohne weiteres anwendbar, weil das im jüngeren Bild ausgewählte Objekt im älteren Bild auch dann ohne weiteres identifizierbar sein kann, wenn es nur noch einen sehr geringen Kontrast aufweist.

Die durch die Bildverarbeitungseinrichtung 24 wie vorstehend ermittelte Sichtweite δ wird der Steuereinrichtung 25 zugeführt und durch diese weiter verarbeitet, indem durch die Steuereinrichtung 25 abhängig von der Sichtweite δ eine erforderliche Leuchtdichte für das von der Rückleuchte 14 ausgesandte Lichtbündel ermittelt wird und schließlich eine Stromstärke und/oder Spannung ermittelt wird, mit der die Lichtquelle 15 der Rückleuchte 14 versorgt werden muß, um die erforderliche Leuchtdichte des ausgesandten Lichtbündels zu erreichen. Je geringer die ermittelte Sichtweite ist, desto höher muß die Leuchtdichte des von der Rückleuchte 14 ausgesandten Lichtbündels sein, um eine ausreichende Sichtbarkeit für den nachfolgenden Verkehr zu gewährleisten. Die Leuchtdichte kann durch die Steuereinrichtung 25 in Stufen oder kontinuierlich eingestellt werden. Durch die Steuereinrichtung 25 wird außerdem wie vorstehend angegeben die Umgebungshelligkeit bei der Einstellung der Leuchtdichte berücksichtigt. Vorzugsweise wird durch die Steuereinrichtung 25 die Leuchtdichte des von der Rückleuchte 14 ausgesandten Lichtbündels derart eingestellt, daß die Erkennbarkeit und die Auffälligkeit des von der Rückleuchte 14 ausgesandten Lichtbündels unabhängig von der Helligkeit und der Sichtweite in der Umgebung des Fahrzeugs zumindest annähernd konstant ist.

Die Sensoreinrichtung 20 mit dem Bildsensor 22 und der Bildverarbeitungseinrichtung 24 kann auch für andere Systeme im Fahrzeug verwendet werden, beispielsweise für eine adaptive Geschwindigkeitsregeleinrichtung, für eine automatisierte Fahrzeugführung oder für eine Verkehrszeichenerkennungseinrichtung. Die Sensoreinrichtung 20 ist dabei nur einmal erforderlich und kann für unterschiedliche Funktionen genutzt werden.

Zusätzlich kann auch vorgesehen sein, daß abhängig von der ermittelten Sichtweite δ die mögliche Höchstgeschwindigkeit des Fahrzeugs begrenzt wird. Wenn das Fahrzeug mit einer Geschwindigkeitsregelanlage ausgerüstet ist, so kann auch vorgesehen sein, daß durch diese automatisch der Geschwindigkeit des Fahrzeugs abhängig von der Sichtweite angepasst wird, das heißt mit abnehmender Sichtweite verringert wird. Außerdem kann die Sensoreinrichtung 20 auch verwendet werden, um wenigstens eine der vorderen und/oder der rückwärtigen Beleuchtungseinrichtungen des Fahrzeugs abhängig von der Helligkeit und der Sichtweite in der Umgebung des Fahrzeugs einzuschalten und/oder auszuschalten.

**Patentansprüche**

1. Einrichtung zur automatischen Einstellung der Leuchtdichte des von wenigstens einer rückwärtigen Beleuchtungseinrichtung eines Fahrzeugs ausgesandten Lichtbündels in Abhängigkeit von der Helligkeit und der Sichtweite in der Umgebung des Fahrzeugs mit wenigstens einer Sensoreinrichtung (20) zur Ermittlung der Helligkeit und der Sichtweite in der Umgebung des Fahrzeugs und mit einer Steuereinrichtung zur Ansteuerung der wenigstens einen Beleuchtungseinrichtung derart, daß das von dieser ausgesandte Lichtbündel eine erforderliche Leuchtdichte aufweist, **dadurch gekennzeichnet, daß** eine einzige Sensoreinrichtung (20) zur Ermittlung der Helligkeit und der Sichtweite vorgesehen ist, die einen Bildsensor (22) und eine Bildverarbeitungseinrichtung (24) aufweist, wobei die Einstellung der Leuchtdichte des von der wenigstens einen Beleuchtungseinrichtung (14) ausgesandten Lichtbündels derart erfolgt, daß die Erkennbarkeit und Auffälligkeit des Lichtbündels für den nachfolgenden Verkehr unabhängig von der Helligkeit und der Sichtweite zumindest annähernd konstant ist, indem die Leuchtdichte des Lichtbündels mit zunehmender Umgebungshelligkeit erhöht wird.

2. Einrichtung nach Anspruch 1, **dadurch gekennzeichnet, daß** der Bildsensor (22) eine nichtlineare, vorzugsweise eine logarithmische Wandelkennlinie aufweist.

3. Einrichtung nach Anspruch 1 oder 2, **dadurch gekennzeichnet, daß** der Bildsensor (22) ein CCD-Bildsensor oder ein CMOS-Bildsensor ist.

4. Einrichtung nach einem der Ansprüche 1 bis 3, **dadurch gekennzeichnet, daß** zur Ermittlung der Sichtweite durch die Sensoreinrichtung (20) der Kontrast an wenigstens einem Objekt (26) von wenigstens zwei unterschiedlich weit vom Objekt (26) entfernten Positionen aus gemessen und hieraus die Sichtweite ermittelt wird.

5. Einrichtung nach Anspruch 4, **dadurch gekennzeichnet, daß** die Ermittlung der Sichtweite anhand des Verhältnisses der gemessenen Kontrastwerte und der Differenz der Entfernungen der Positionen vom Objekt (26) erfolgt.

6. Einrichtung nach einem der Ansprüche 1 bis 5, **dadurch gekennzeichnet, daß** die Einstellung der Leuchtdichte des von der wenigstens einen Beleuchtungseinrichtung (14) ausgesandten Lichtbündels kontinuierlich erfolgt.

7. Einrichtung nach Anspruch 1, **dadurch gekennzeichnet, daß** die Leuchtdichte des ausgesandten Lichtbündels umso höher ist, je geringer die ermittelte Sichtweite ist.

**Claims**

1. Device for automatically adjusting the luminance of a beam of light, emitted by at least one rear lighting device of a vehicle, as a function of the brightness and the visibility in the surroundings of the vehicle with at least one sensor device (20) for determining the brightness and the visibility in the surroundings of the vehicle, and having a control device for actuating the at least one lighting device in such a way that the beam of light which is emitted by the latter has a necessary luminance, **characterized in that** a single sensor device (20) is provided for determining the brightness and the visibility and it has an image sensor (22) and an image-processing device (24), wherein the luminance of the beam of light emitted by the at least one lighting device (14) is adjusted in such a way that the beam of light can be detected by and is conspicuous to the following traffic to an at least approximately constant degree irrespective of the brightness and the visibility by virtue of the fact that the luminance of the beam of light is made greater as the ambient brightness increases.

2. Device according to Claim 1, **characterized in that** the image sensor (22) has a non-linear, preferably logarithmic conversion characteristic curve.

3. Device according to Claim 1 or 2, **characterized in that** the image sensor (22) is a CCD image sensor or a CMOS image sensor.

4. Device according to one of Claims 1 to 3, **characterized in that**, in order to determine the visibility, the sensor device (20) measures the contrast on at least one object (26) from at least two positions which are at different distances from the object (26), and determines the visibility therefrom.

5. Device according to Claim 4, **characterized in that** the visibility is determined by reference to the ratio of the measured contrast values and the difference between the distances of the positions from the object (26).

6. Device according to one of Claims 1 to 5, **characterized in that** the luminance of the beam of light emitted by the at least one lighting device (14) is adjusted continuously.

7. Device according to Claim 1, **characterized in that** the luminance of the emitted beam of light is higher the lower the visibility which is determined.

**Revendications**

1. Installation pour régler automatiquement la densité d'éclairage du faisceau lumineux émis par au moins une installation d'éclairage arrière d'un véhicule, en fonction de la luminosité et de la visibilité dans l'environnement du véhicule, à l'aide d'au moins une installation de capteur (20) pour déterminer la luminosité et la visibilité dans l'environnement du véhicule et au moins une installation de commande pour commander au moins une installation d'éclairage de façon que le faisceau lumineux émis par celle-ci présente la densité d'éclairage requise,
**caractérisée par**
une unique installation de capteur (20) pour déterminer la luminosité et la visibilité, cette installation comportant un capteur d'image (22) et une installation de traitement d'image (24),
le réglage de la densité lumineuse du faisceau lumineux émis par au moins l'installation d'éclairage (14) étant tel que la visibilité et la reconnaissance du faisceau lumineux pour la circulation qui suit, soient au moins sensiblement constantes, indépendamment de la luminosité et de la visibilité, en ce que l'on augmente la densité d'éclairage du faisceau lumineux en fonction de l'augmentation de la luminosité ambiante.

2. Installation selon la revendication 1,
**caractérisée en ce que**
le capteur d'image (22) a une caractéristique de conversion non linéaire, de préférence logarithmique.

3. Installation selon la revendication 1 ou 2,
**caractérisée en ce que**
le capteur d'image (22) est un capteur d'image CCD ou autre capteur d'image CMOS.

4. Installation selon l'une des revendications 1 à 3,
**caractérisée en ce que**
pour déterminer la visibilité avec l'installation de capteur (20), on mesure le contraste sur au moins un objet (26) dans au moins deux positions éloignées différemment pour l'objet (26) et on en déduit la visibilité.

5. Installation selon la revendication 4,

**caractérisée en ce que**
pour déterminer la visibilité on utilise le rapport des valeurs de contrainte mesurées et la différence de l'éloignement des positions de l'objet (26).

6. Installation selon l'une des revendications 1 à 5,
   **caractérisée en ce qu'**
   on règle en continu la densité lumineuse du faisceau lumineux émis par au moins une installation d'éclairage (14).

7. Installation selon la revendication 1,
   **caractérisée en ce que**
   la densité d'éclairage du faisceau lumineux émis est d'autant plus forte que la visibilité déterminée est faible.

FIG. 1

EP 1 476 326 B1

FIG. 2

FIG. 3

9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2052266 A
- DE 10034461
- EP 0691534 A